# EUROPÄISCHE PATENTANMELDUNG

(11) **EP 1 081 030 A2**
(43) Veröffentlichungstag der Anmeldung: **07.03.2001**
(21) Anmeldenummer: 00113554.0
(22) Anmeldetag: 27.06.2000
(51) Int. Cl.: B62H 3/00

(54) **Fahrradständer**

(30) Priorität: 01.09.1999 DE 29915302 U
(71) Anmelder: Stub, Sebastian, 72800 Eningen (DE); Jedek, Walter, 72793 Pfullingen (DE)
(72) Erfinder: Stub, Sebastian, 72800 Eningen (DE); Jedek, Walter, 72793 Pfullingen (DE)
(74) Vertreter: Klinger, Alfred N.

(57) **Zusammenfassung**

Die Erfindung betrifft einen Präsentationsständer für Fahrräder sowie ein Fahrradständer-Set.

Der erfindungsgemäße Fahrradständer umfaßt ein Tretlagerachseneinhängteil (40) zum Einhängen eines Tretachsenabschnitts zwischen Kurbel und Tretlagergehäuse des Fahrrades, ein Tretlagergehäuseauflageteil (50) zum Auflegen eines Tretlagergehäuseabschnitts des Fahrrades, und eine erste sowie eine zweite Strebe (20, 30), die der Standfestigkeit des Fahrradständers dienen.

Damit wird ein universeller Fahrrad-Präsentationsständer bereitgestellt, der es Händlern ermöglicht, jedes beliebige Fahrrad dem Kunden zu präsentieren. Hierbei können auch sämtliche Funktionen (z. B. Federung) demonstriert werden, ohne das Fahrrad aus dem Ständer zu heben. Schließlich können auch kleinere Wartungs- und Montagearbeiten durchgeführt werden.

## Beschreibung

Die Erfindung betrifft einen Fahrradständer, insbesondere zur Präsentation eines Fahrrades, sowie ein Fahrradständer-Set.

Fahrradständer üblicher Bauart können nicht auf die verschiedenen Fahrradtypen (Trekkingrad, Rennrad, Mountainbike, Kinderrad, BMX etc.) angepasst werden, da sie nicht verstellbar sind. Diese Ständer sind auch oft so gebaut, dass die Funktion des Fahrrades nicht geprüft werden kann, d. h. das Drehen der Kurbel, um die Schaltung zu testen und ggf. einzustellen, oder bei gefederten Rädern die Federung vorne und/oder hinten (insbesondere hinten) zu prüfen.

Es ist eine Aufgabe der Erfindung, einen universellen Fahrradständer, insbesondere Fahrrad-Präsentationsständer bereitzustellen, der die Präsentation eines beliebigen Fahrrades ermöglicht.

Diese Aufgabe wird durch einen Fahrradständer gemäß Anspruch 1 gelöst. Vorteilhafte Weiterbildungen sind Gegenstand der Unteransprüche.

Der erfindungsgemäße Fahrradständer bildet einen Präsentationsständer für Fahrräder jeder Größe und jeder Rahmengeometrie. Er ermöglicht es Händlern, jedes beliebige Fahrrad dem Kunden zu präsentieren. Hierbei können, auch ohne das Fahrrad aus dem Ständer zu heben, sämtliche Funktionen demonstriert werden. Es lassen sich auch kleine Wartungsarbeiten wie Laufradwechsel, Brems- und Schaltungseinstellung sowie Funktionsprüfungen durchführen. Mit der Erfindung wird erreicht, das man jedes beliebige Fahrrad (Größe, Einsatzbereich und Rahmengeometrie) in den Ständer stellen kann und dem Kunden präsentieren kann. Zusätzlich kann jede technische Funktion demonstriert bzw. geprüft werden wie: Schaltung, Bremsen, Lauf der Laufräder, Funktion der Federelemente vom und ggf. hinten.

Der herausragende Vorteil ist die Möglichkeit, bei einem vollgefederten Fahrrad die Federfunktion vorne und insbesondere hinten zu testen bzw. zu demonstrieren, ohne das Fahrrad aus dem Ständer zu entnehmen. Dies ist besonders bei Platzmangel ein deutlicher Vorteil gegenüber herkömmlichen Produkten. Händler als auch Endverbraucher können von diesem Ständer profitieren, da er auch für kleine Wartungs- und Montagearbeiten (s.o.) genutzt werden kann.

Bei entsprechender Ausbildung des Fahrradständers, insbesondere wenn die Streben entsprechend beweglich sind, läßt sich der Fahrradständer bei Nichtbedarf oder Versand plalzsparend zusammenklappen. Damit lassen sich die Streben und ggf. der Bügel auch gut lagern und transportieren.

Die Erfindung wird nachfolgend anhand von Ausführungsbeispielen des Fahrradständers bzw. von dessen Komponenten und mit Bezug auf die beigefügten Zeichnungen detaillierter beschrieben. Es stellen dar:
- Fig. 1: eine Seitenansicht eines Ständers mit zur Aufnahme verschiedener Fahrradtypen drehbarer Aufnahme,
- Fig. 2: eine Vorderansicht eines Ständers,
- Fig. 3: eine Draufsicht eines Ständers,

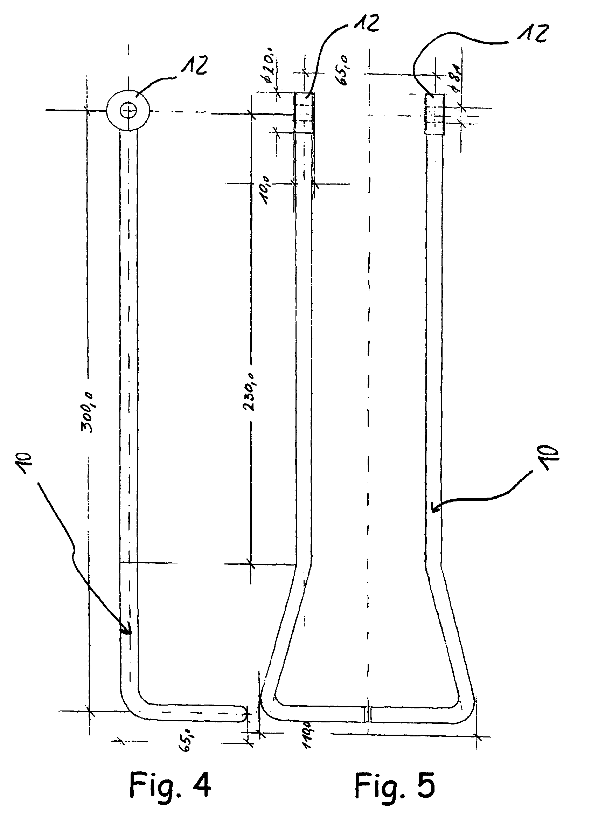

- Fig. 4 und 5: einen Unterrohrfixierungsbügel,
- Fig. 6 und 7: eine erste Strebe,
- Fig. 6A und 7A: Details einer abgewandelten ersten Strebe nach den Fig. 6 und 7,
- Fig. 8 und 9: eine zweite Strebe,
- Fig. 9A und 9B: Details einer abgewandelten zweiten Strebe nach den Fig. 8 und 9,
- Fig. 10 und 11: eine aus einem Tretlagerachseneinhängteil und einem Tretlagergehäuseauflageteil einstückig gebildete Aufnahme, und
- Fig. 12 bis 15: Komponenten einer Aufnahme, bei der das Tretlagerachseneinhängteil in seiner Höhe relativ zu einem Tretlagergehäuseauflageteil verstellbar ist.

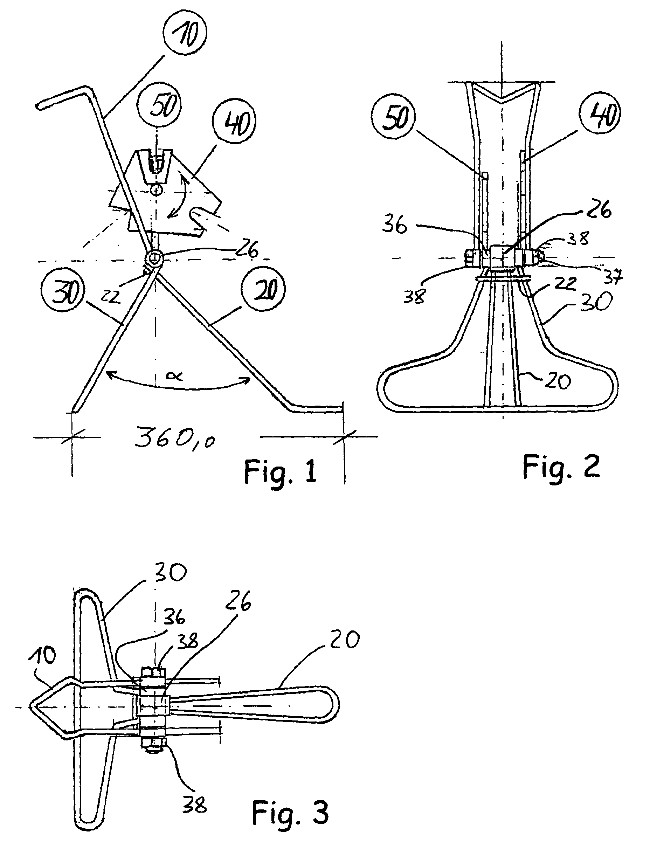

Die Figuren veranschaulichen einen Präsentationsständer für Fahrräder jeder Größe und jeder Rahmengeometrie. In Pos. 40 wird die Tretlagerachse (zwischen Kurbel und linkem Tretlagergehäuse) eingehängt und liegt gegenüber am rechten Tretlagergehäuse Pos. 50 auf. Um die verschiedenen Fahrradtypen aufnehmen zu können, kann mittels einer drehbaren Aufnahme (40 + 50, Fig. 1) die gewünschte Position erreicht werden. Zur Stabilisierung des Fahrrades wird mit Hilfe eines verstellbaren Bügels (10) das Unterrohr fixiert. Die Bezugszeichen 20 und 30 bezeichnen Streben, die der Standfestigkeit dienen. Der Bügel 10, die Strebe 20 und die Strebe 30 sind beweglich, so dass sie sich auch gut lagern und transportieren lassen. Im Gebrauchszustand schließen die Streben 20, 30 vorzugsweise einen Winkel α von etwa 50° bis 110°, weiter bevorzugt von 70° bis 80° ein.

Bei der Ausführung nach Fig. 1 kann die Aufnahme 40, 50 wahlweise in verschiedene Positionen gedreht werden. Damit lassen sich verschiedene Fahrradtypen aufnehmen oder ein Fahrrad in verschiedenen Höhen gehalten werden. Alternativ oder zusätzlich kann die Aufnahme 40, 50 oder ein Teil davon verschiebbar sein.

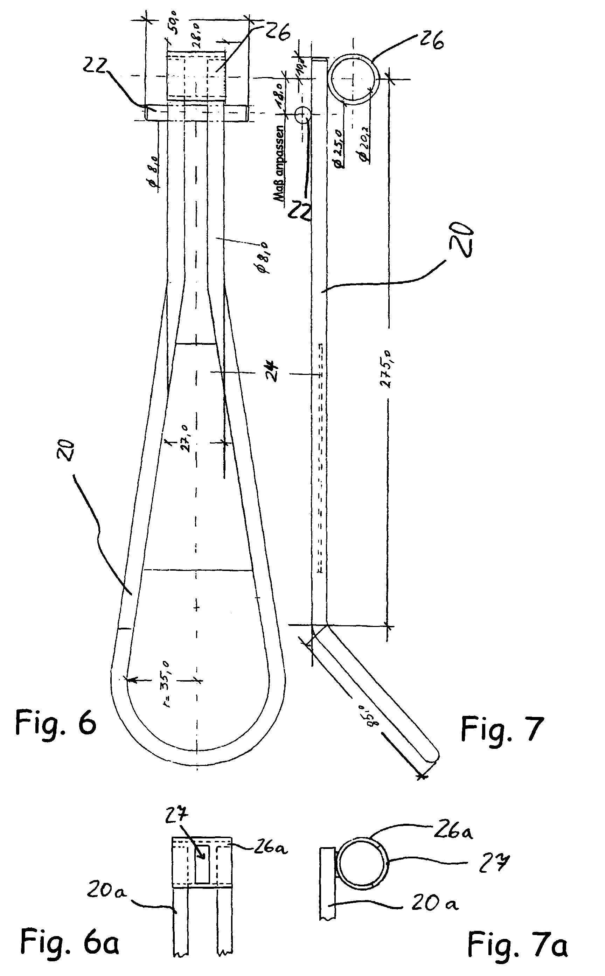

Wie es aus den Fig. 1 und 2 ersichtlich ist, stützt sich die erste Strebe 20 im Gebrauchszustand des Fahrradständers mittels einer Querstrebe 22 an der zweiten Strebe 30 ab. Die Querstrebe 22 ist im dargestellten Beispiel an der ersten Strebe 20 angeschweißt (vgl. auch Fig. 6 und 7).

Die Fig. 6 und 7 stellen eine Ausführungsform einer ersten Strebe 20 dar. 24 bezeichnet ein Blech. Das Teil 24 kann vorteilhaft zur Aufbringung eines Kennzeichens etc. verwendet werden. Herstellungstechnisch günstig ist es, wenn die Streben 20,30, und ggf. der Bügel 10 jeweils aus einem Metallstangenmaterial einheitlicher Stärke gebildet sind.

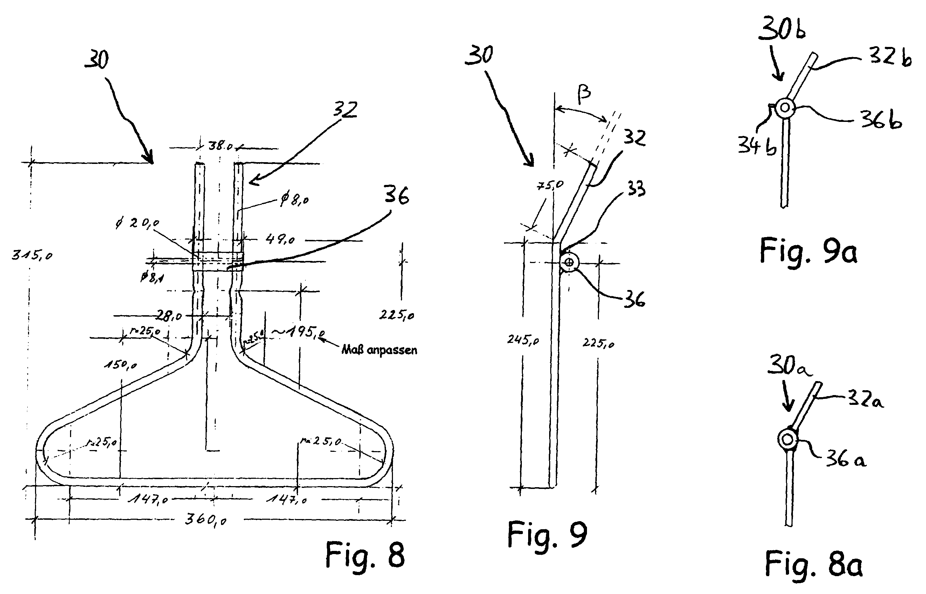

Zur Zusammenklappbarkeit des Ständers sind die Streben 20 und 30 an ihren oberen Enden drehgelenkig miteinander verbunden. Hierfür ist an einer der Streben (hier 20) eine Gelenkhülse 26 angeschweißt, die von einem hohlzylindrischen Gelenkzapfen 36 durchsetzt ist, der an der anderen Strebe (hier 30) angeschweißt ist (vgl. Schweißung 33 in Fig. 9. Vor dem Schweißen ist Pos. 20 einzufügen). Bevorzugt verläuft durch die zylindrische Durchgangsöffnung des Gelenkzapfens 36 ein Gewindebolzen 37, an dessen Enden ein Unterrohrfixierungsbügel 10 angeschraubt ist.

Bei den dargestellten Ausführungsbeispielen kann der Bügel 10 zur Anpassung an den jeweiligen Fahrradrahmen um die Achse des Gewindebolzens 37 verschwenkt werden, wobei der Bügel 10 stufenlos verschwenkt werden kann und durch Reibschluss in der gewünschten Stellung gehalten wird. Dieser Reibschluss wird durch Klemmung von Augen 12 des Bügels 10 zwischen der jeweiligen Stirnfläche des Gelenkzapfens 36 und einer am Ende des Gewindebolzens aufgeschraubten Mutter 38 gewährleistet. Zur Erhöhung der Zuverlässigkeit dieser Reibschlussfixierung des Bügels 10 sind bevorzugt geeignete Beilagscheiben, z.B. aus Kunststoffmaterial, zwischen den Augen 12 und den Stirnflächen des Gelenkzapfens 36 und/oder zwischen den Augen 12 und den Muttern 38 zwischengefügt.

Fig. 8 zeigt eine vorteilhafte Ausführung der zweiten Strebe 30, die sich nach unten hin zur Erhöhung der Standfestigkeit des Ständers verbreitert. Alternativ oder zusätzlich kann eine solche Verbreiterung auch bei der ersten Strebe 20 vorgesehen sein.

Aus Fig. 9 ist ein abgewinkelter oberer Abschnitt 32 der Strebe 30 ersichtlich. Der Winkel β in Fig. 9 beträgt etwa 25°, und ist derart gewählt, dass im Gebrauchszustand des Ständers der Abschnitt 32 etwa vertikal nach oben absteht. Der Abschnitt 32 ermöglicht die Führung einer vertikal verstellbaren Aufnahme, wie es unten noch beschrieben wird.

Die Fig. 9A und 9B veranschaulichen eine alternative Gestaltung der Strebe 30a, bei der der Abschnitt 32a separat an dem Gelenkzapfen 36a angeschweißt ist. Fig. 9B zeigt eine vorteilhafte Modifikation an der Strebe 30b, bei der von der Mantelfläche des Gelenkzapfens 36b, bezüglich der Längsrichtung des Zapfens 36b mittig, ein Anschlagstift 34b radial absteht. Im Zusammenwirken mit einer (wie in den Fig. 6A und 7A dargestellten) Modifikation an der ersten Strebe 20, ermöglicht es diese Ausführung, auf die Querstrebe 22 der eingangs beschriebenen Ausführungsform (z. B. Fig. 2) zu verzichten. Statt dessen erfolgt die Fixierung der Winkelstellung zwischen den beiden Streben 20 und 30 durch Anschlag des Anschlagstifts 34b am Ende eines Langlochs 24a, das in der Gelenkhülse 26a in deren Umfangsrichtung vorgesehen ist und den Anschlagstift 34b im zusammengebauten Zustand des Ständers aufnimmt.

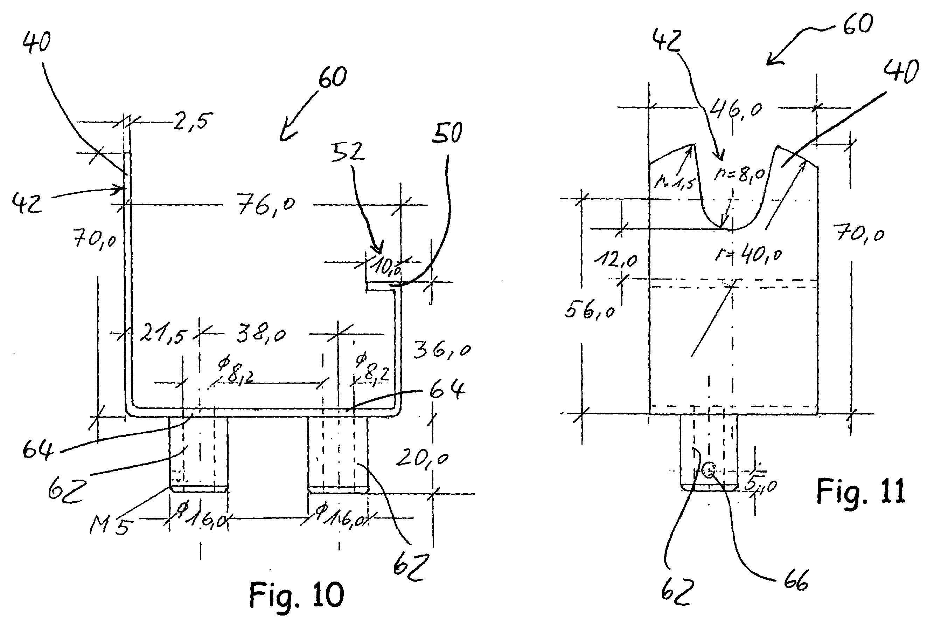

Die Fig. 10 und 11 zeigen eine aus einem Tretlagerachseneinhängteil 40 und einem Tretlagergehäuseauflageteil 50 gebildete Aufnahme 60 zum Aufnehmen und Halten eines Fahrrades im Bereich des Tretlagergehäuses. Diese Aufnahme 60 ist in der Seitenansicht von Fig. 10 im wesentlichen U-förmig, wobei einer der Schenkel zur Bildung eines Tretlagerachseneinhängabschnitts 42 ausgeschnitten oder ausgestanzt ist und der andere Schenkel zur Ausbildung einer Auflagefläche an dessen Ende bevorzugt abgewinkelt ist (52 in Fig. 10). Zur leichteren Drehbarkeit der Kurbel eines aufgenommenen Fahrrads kann der Abschnitt 42 reibungsmindernd beschichtet oder mit einer reibungsvermindernden Materiallage (insbesondere aus Kunststoff) versehen sein. Zum Schutz des Fahrrades ist eine geeignete Beschichtung (z.B. Kunststofflage) an allen Stellen des Fahrradständers zweckmäßig, die mit dem Fahrrad in Kontakt treten können.

Von der Aufnahme 60 stehen zwei Hülsen 62 nach unten ab, in die im Gebrauchszustand des Ständers der obere Abschnitt 32 einer Strebe 30 verschiebbar eingreift. Dieser Abschnitt 32 wird hier vorteilhaft von einem Stangenpaar gebildet. Zur Erhöhung des Verstellwegs ist der Boden der Aufnahme 60 mit Durchgangsöffnungen 64 zum Durchtritt des Abschnitts 32 versehen.

Die Fixierung der Aufnahme 60 in der gewünschten Höhenposition erfolgt bei dem Ausführungsbeispiel nach den Fig. 10 und 11 durch eine nicht dargestellte Klemmschraube (vorzugsweise mit Flügelkopf), die in eine seitlich angeordnete Gewindedurchgangsöffnung 66 einer der Hülsen 62 eingeschraubt werden kann, um den Abschnitt 32 festzuklemmen.

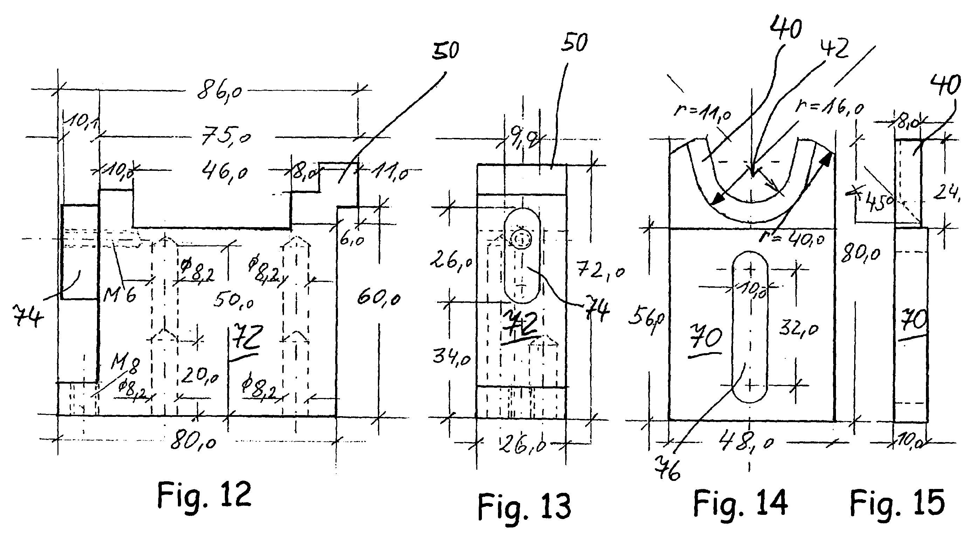

Die Fig. 12 bis 15 zeigen eine modifizierte Ausführung einer Aufnahme, bei der ein das Tretlagerachseneinhängteil 40 aufweisendes Gleitstück 70 (Fig. 14 und 15) auf einer Seite eines das Tretlagergehäuseauflageteil 50 aufweisenden Basisteils 72 (Fig. 12 und 13) verschiebbar geführt ist. Zu diesem Zweck steht von dem Basisteil 72 auf einer Seite ein langgestreckter Vorsprung 74 ab, der im Gebrauchszustand in ein entsprechendes, hinreichend langes, Langloch 76 des Gleitstücks 70 eingreift.

Eine weitere Besonderheit der Aufnahme nach den Fig. 12 bis 15 ist eine in den Fig. 14 und 15 dargestellte Schrägfläche im Bereich des Tretlagerachseneinhängabschnitts 42. Diese Abschrägung ist im Hinblick auf die Aufnahme bestimmter Fahrräder günstig. Auch bei dieser Aufnahme lassen sich zur Reibungsverminderung bzw. zum Schutz des Fahrrades Beschichtungen oder dergleichen vorsehen, wie oben beschrieben.

Auch bei der Aufnahme 60 gem. den Fig. 12 bis 15 kann eine Höhenverstellbarkeit der gesamten Aufnahme 60 vorgesehen sein, etwa wie mit Bezug auf die Fig. 10 und 11 beschrieben.

Zur einfachen und genauen Anpassung des Ständers an verschiedene Fahrradrahmen ist es vorteilhaft, eine Mehrzahl von entsprechend angepassten Aufnahmen 60 mit standartisiertem Bodenbereich für ein und den selben Ständer vorzusehe ( 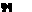 Set").

Es versteht sich, dass sämtliche Maßangaben in den beigefügten Zeichnungen sich lediglich auf bestimmte Ausführungsformen eines erfindungsgemäßen Fahrradständers bzw. von dessen Komponenten beziehen. Die konkreten Abmessungen und Formen der Komponenten können im Rahmen der Erfindung weitgehend variiert werden. Auch können im Rahmen der Erfindung Merkmale kombiniert werden, die oben mit Bezug auf verschiedenen Ausführungsformen beschrieben wurden.

## Patentansprüche

1. Fahrradständer zum Präsentieren eines Fahrrads, umfassend
ein Tretlagerachseneinhängteil (40) zum Einhängen eines Tretachsenabschnitts zwischen Kurbel und Tretlagergehäuse des Fahrrades,
ein Tretlagergehäuseauflageteil (50) zum Auflegen eines Tretlagergehäuseabschnitts des Fahrrades, und
eine erste sowie eine zweite Strebe (20, 30), die der Standfestigkeit des Fahrradständers dienen.

2. Fahrradständer nach Anspruch 1, wobei das Tretlagerachseneinhängteil (40) zum Einhängen eines Tretlagerachsenabschnitts zwischen linker Kurbel und einem linken Tretlagergehäuseabschnitt ausgebildet ist und das Tretlagergehäuseauflageteil (50) zur Auflage eines rechten Tretlagergehäuseabschnitts ausgebildet ist.

3. Fahrradständer nach Anspruch 1 oder 2, wobei das Tretlagerachseneinhängteil (40) und das Tretlagergehäuseauflageteil (50) eine Aufnahme (40, 50) bilden, die zur Aufnahme von verschiedenen Fahrradtypen drehbar ist.

4. Fahrradständer nach Anspruch 1, 2 oder 3, wobei ein verstellbarer Unterrohrfixierungsbügel (10) zum Fixieren des Unterrohrs des Fahrrades vorgesehen ist.

5. Fahrradständer nach Anspruch 4, wobei der Unterrohrfixierungsbügel (10), die erste Strebe (20) und die zweite Strebe (30) zur Zusammenklappbarkeit des Fahrradständers beweglich sind.

6. Fahrradständer nach einem der vorhergehenden Ansprüche, wobei das Tretlagerachseneinhängteil (40) und das Tretlagergehäuseauflageteil (50) eine insgesamt höhenverstellbare Aufnahme (40, 50) bilden.

7. Fahrradständer nach einem der vorhergehenden Ansprüche, wobei das Tretlagerachseneinhängteil (40) und das Tretlagergehäuseauflageteil (50) einstückig miteinander verbunden sind.

8. Fahrradständer nach einem der Ansprüche 1 bis 6, wobei das Tretlagerachseneinhängteil (40) und das Tretlagergehäuseauflageteil (50) relativ zueinander verstellbar, insbesondere relativhöhenverstellbar, sind.

9. Fahrradständer nach einem der vorhergehenden Ansprüche, wobei die erste Strebe (20) und die zweite Strebe (30) mittels einer Gelenkhülse (26) und einem diese Gelenkhülse durchsetzenden Gelenkzapfen (36) drehbeweglich verbunden sind.

10. Fahrradständer-Set, umfassend
einen Fahrradständer nach einem der vorhergehenden Ansprüche und mit einer austauschbaren Aufnahme, sowie
wenigstens eine zum Austausch geeignete, weitere Aufnahme.
